# FASCICULE DE BREVET EUROPEEN

(11) **EP 2 985 195 B1**
(45) Date de publication et mention de la délivrance du brevet: **01.01.2020**
(21) Numéro de dépôt: 15175614.5
(22) Date de dépôt: 07.07.2015
(51) Int. Cl.: B60S 1/48

(54) **SYSTÈME D'ESSUYAGE POUR VÉHICULE AVEC SYSTÈME DE LAVE-VITRE**
REINIGUNGSSYSTEM FÜR FAHRZEUG MIT SCHEIBENWASCHSYSTEM
WIPER SYSTEM FOR VEHICLE WITH WINDSHIELD WASHER SYSTEM

(30) Priorité: 17.07.2014 FR 1456857
(43) Date de publication de la demande: 17.02.2016
(73) Titulaire: Valeo Systèmes d'Essuyage, 78322 Le Mesnil Saint Denis (FR)
(72) Inventeur: BLANCHET, Pierre, 86140 Clairvaux (FR); JENDRASZCZAK, Jean, 86100 Châtellerault (FR); PRINCET, Joêl, 86100 Châtellerault (FR); GALLAUD, Eric, 86000 Potiers (FR)
(74) Mandataire: Valeo Systèmes d'Essuyage

(56) Documents cités:
- FR-A- 1 592 752
- FR-A1- 2 927 295

## Description

La présente invention concerne un système d'essuyage d'une surface vitrée de véhicule automobile, telle que le pare-brise et/ou la lunette arrière, présentant un système de lave-vitre.

Dans les systèmes de lave-vitre existant à ce jour, il est connu de prévoir que le liquide de lavage ne soit diffusé que sur une partie seulement de sa course vers le haut ou vers le bas, du balai sur la surface vitrée.

Ainsi, des systèmes de lave-vitre permettant de commander l'aspersion lorsque le ou les bras porte-balai sont dans des zones angulaires prédéfinies, ont déjà été développés (voir par exemple le document FR2927295 A1).

Le document GB 1 236 398 décrit un système lave-vitre où, une fois actionné, une pompe refoule constamment un liquide de lavage depuis un réservoir à travers un circuit fluidique jusqu'à un ou plusieurs gicleurs. Une électrovanne est disposée dans le circuit fluidique pour diriger le liquide de lavage soit vers les gicleurs, soit via une conduite de retour vers le réservoir. Ainsi, en fonction de la position de l'électrovanne, les jets de liquide de lavage projetés par les gicleurs sont interrompus par moments. La position de l'électrovanne est commandée via un palpeur mécanique qui coopère avec le chant d'une came mécanique disposée en rotation sur un axe du moteur d'entraînement des essuie-glaces.

Le moteur d'entraînement des essuie-glaces peut être commandé via des pistes conductrices disposées sur la came et formant des interrupteurs rotatifs avec des contacts électriques.

La solution décrite dans ce document est complexe et nécessite beaucoup de pièces différentes.

De plus, l'électrovanne raccordée au circuit fluidique du système de lavage doit être disposée à proximité du moteur d'entraînement, ce qui peut causer des problèmes de fonctionnement lorsqu'il y a par exemple des problèmes de fuite au niveau de l'électrovanne.

En outre, cette solution est électriquement énergivore car la pompe fonctionne en continue et l'électrovanne doit être commutée constamment.

Le document FR 2 766 144 décrit un système de nettoyage d'une vitre de véhicule automobile, comportant des moyens de projection d'un liquide lave-glace sur celle-ci avec au moins deux gicleurs et des moyens d'essuyage de la vitre selon un cycle de balayage déterminé.

Ce système comporte en outre des moyens de contrôle du fonctionnement des moyens de projection de liquide sur la glace, à partir d'une information de position des moyens d'essuyage dans le cycle de balayage, délivrée par des moyens de détection correspondants, pour n'autoriser la projection de liquide qu'à l'avant des moyens d'essuyage, dans le sens de balayage de ceux-ci.

Les moyens de détection de la position des moyens d'essuyage sont par exemple constitués par un capteur de position intégré directement dans le moteur d'activation des moyens d'essuyage.

De tels moyens de détection peuvent par exemple comporter un interrupteur à frotteur et une piste de contact constituant un organe en forme d'interrupteur de commande de l'alimentation par exemple d'une électrovanne, interposée entre la sortie de la pompe de lave-glace et les gicleurs.

Dans cet exemple de l'état de la technique, certes le liquide de lavage est toujours projeté à l'avant de chaque balai, mais la pompe fonctionne toujours en continue de sorte que la quantité de liquide de lavage pour un cycle est très important. De plus, l'utilisation de cette électrovanne est également un facteur de cout important rendant cette solution très onéreuse. Cette solution présente en outre les mêmes inconvénients que le document GB 1 236 398.

Le document US 4, 275, 477 décrit un système de lave-vitre apte à coopérer avec le système d'essuyage d'un pare-brise de véhicule. Le système de lave-vitre est structurellement indépendant du système d'essuyage, notamment par le fait que les gicleurs sont fixes par rapport au capot du véhicule. Les deux systèmes coopèrent cependant étroitement du fait qu'une partie du liquide de lavage contenu dans le réservoir de nettoyage est prélevée par une pompe en utilisant des informations et commandes électriques données par une came située sur le moteur d'entraînement du bras porte-balai. Plus précisément, dans ce système, on prévoit qu'il n'y ait aucune aspersion de liquide lorsque le bras arrive à proximité du jet du gicleur.

A la différence des deux autres documents de l'état de la technique cités ci-dessus, l'alimentation de la pompe du liquide de lavage est commandée via des pistes conductrices situées sur la came et de nombreux frotteurs coopérant avec ces pistes.

Cependant on remarque que les contacts destinés à être en contact avec les pistes conductrices sont reliés à un pôle positif de la batterie, ce qui est peu avantageux en termes de sécurité électrique.

De plus, la came présente plusieurs pistes et segments conducteurs indépendants, de sorte que la came du document US 4 285 089 est onéreuse et complexe à monter.

Le nombre élevé de frotteurs est également une source de défaillances potentielles.

La présente invention vise à proposer un système d'essuyage avec une came simplifiée et un nombre réduit de frotteurs.

A cet effet, l'invention a pour objet un moteur d'entraînement d'au moins un bras porte-balai, destiné à essuyer une surface vitrée de véhicule automobile, le moteur comprenant une surface formant came liée à rotation concentriquement avec un arbre de rotation du moteur d'entrainement, et des moyens fixes de lecture de la came aptes à coopérer avec ladite came suivant les positions angulaires occupées par ladite came pour générer des signaux de contrôle électriques variant en fonction de la position angulaire du bras porte-balai sur la surface vitrée, la came comporte une première piste conductrice circulaire, une deuxième piste conductrice en arc de cercle, concentrique par rapport à la première piste conductrice et reliée à celle-ci via un pont conducteur et en ce que les moyens de lecture fixes sont formés par trois frotteurs aptes à entrer ou non en contact électrique avec respectivement les première et deuxième pistes conductrices et le pont conducteur suivant les positions angulaires occupées par ladite came.

L'invention a également pour objet un système d'essuyage d'une surface vitrée de véhicule automobile présentant un système de lave-vitre apte à être utilisé en association avec un réservoir contenant un liquide de lavage, ledit système d'essuyage comprenant un moteur d'entraînement selon l'invention, et le système de lave-vitre comprenant une pompe destinée à être reliée fluidiquement d'une part audit réservoir, et d'autre part à au moins un gicleur apte à délivrer un jet de liquide au niveau de la surface vitrée du véhicule.

Ainsi, la came avec la piste conductrice est simplifiée et peut être réalisée à moindre coût.

De plus, on utilise un même ensemble de pistes conductrices pour la commande du moteur d'entraînement et pour l'alimentation de la pompe.

De surcroît, positionner ainsi le pont conducteur concentriquement entre la première et deuxième piste conductrice permet de renforcer la tenue mécanique et d'éviter d'éventuelles déformations de cette portion de came, le pont conducteur n'étant pas en porte à faux. En effet, la surface de contact du pont conducteur étant plus réduite que la surface de contact de la première et deuxième piste conductrice, le pont conducteur est soumis à des contraintes mécaniques plus fortes lors du contact avec son frotteur respectif.

Le système d'essuyage peut comporter en outre une ou plusieurs des caractéristiques suivantes prises seules ou en combinaison :
Selon un aspect, les première et deuxième pistes conductrices et le pont conducteur sont réalisés d'une seule pièce.

Selon un autre aspect la première piste conductrice est reliée à la masse via son frotteur associé.

Le frotteur associé à la deuxième piste conductrice est par exemple reliée à une pompe.

Le frotteur associé au pont conducteur est par exemple relié à une borne de commande du moteur d'entraînement pour signaler la position d'arrêt.

Selon un autre aspect, la deuxième piste conductrice et le pont conducteur sont situées à l'intérieur de la première piste conductrice.

Selon encore un autre aspect, l'étendue de la deuxième piste conductrice correspond à un angle définissant la fonction d'arrosage d'un système lave-vitre.

La fonction d'arrosage peut être définie pour réaliser un arrosage lors de la montée des balais d'essuie-glace.

Les première et deuxième pistes conductrices ainsi que le pont conducteur sont par exemple réalisés en laiton.

On prévoit par ailleurs que le pont conducteur soit orienté radialement par rapport à l'axe de rotation de la came.

D'autres avantages et caractéristiques apparaîtront à la lecture de la description de l'invention, ainsi que des dessins annexés sur lesquels :
- la figure 1 est une représentation schématique d'un système d'essuyage selon l'invention dans une première position angulaire d'un moteur d'entraînement d'un bras porte-balai,

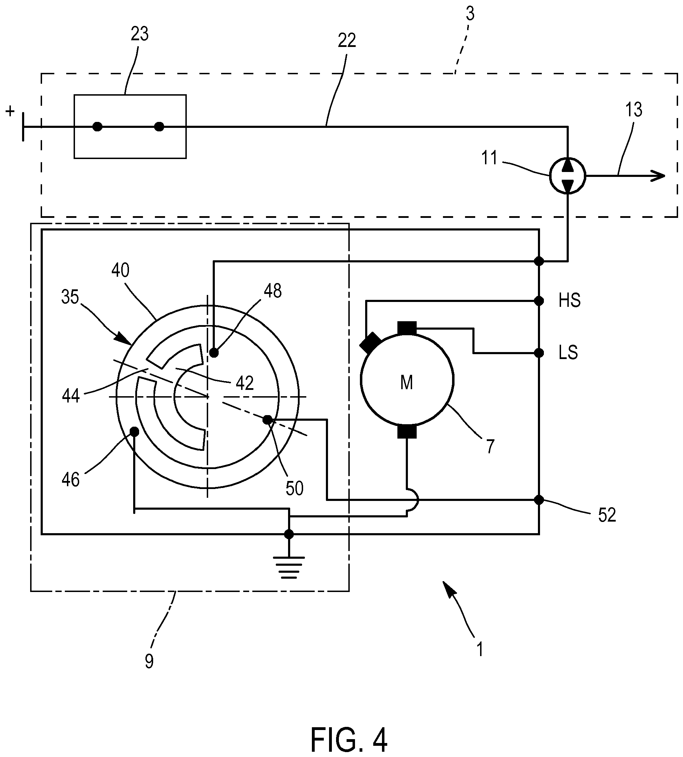

- les figures 2 à 6 sont des représentations schématiques du système d'essuyage de la figure 1 dans d'autres positions angulaires du moteur d'entraînement du bras porte-balai.

Sur ces figures, les éléments identiques portent les mêmes numéros de référence.

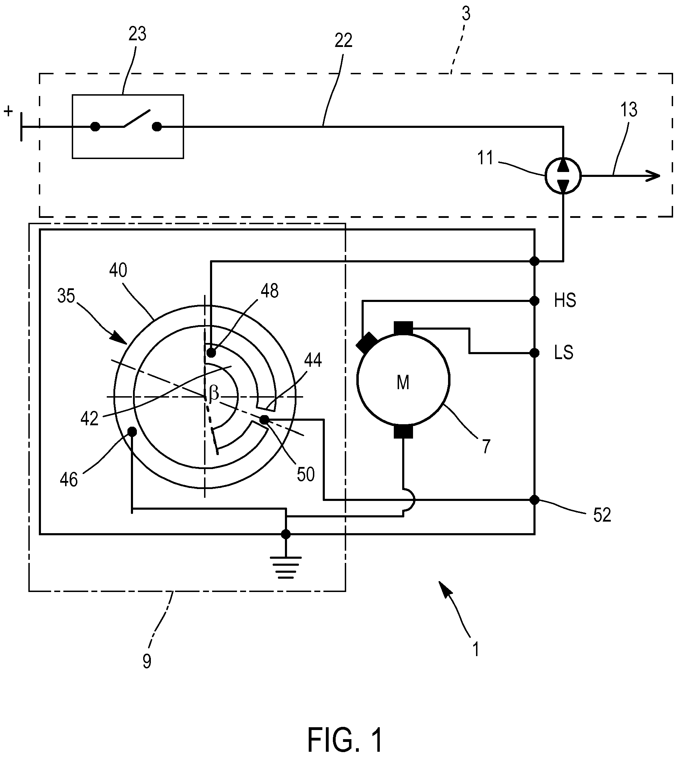

On va maintenant décrire un exemple d'un premier mode de réalisation en référence à la figure 1 d'un système 1 d'essuyage d'une surface vitrée de véhicule automobile.

Ce système 1 comprend un système de lave-vitre 3 apte à être utilisé en association avec un réservoir (non représenté) contenant un liquide de lavage.

Le système d'essuyage 1 comprend un moteur d'entraînement 7 d'au moins un bras porte-balai (non représenté), en particulier un bras porte-balai situé au niveau du parebrise. Le moteur d'entraînement comporte par exemple une borne reliée à une borne « HS » (pour « high speed » en anglais) pour délivrer un courant pour une vitesse de balayage élevée, une borne reliée à une borne « LS » (pour « low speed » en anglais) pour délivrer un courant pour une vitesse de balayage réduite et une borne reliée à la masse.

Le système 1 comprend de plus des moyens 9 de génération de signaux de contrôle électriques liés au moteur d'entraînement 7 aptes à générer des signaux de contrôle électriques variant en fonction de la position angulaire du bras porte-balai sur la surface vitrée, c'est-à-dire le parebrise dans le cas présent.

Le système de lave-vitre 3 comporte une pompe 11, de préférence unidirectionnelle, qui est reliée fluidiquement d'une part audit réservoir et d'autre part respectivement via au moins une conduite de refoulement 13 à au moins un gicleur (non représentés). La conduite de refoulement 13 est par exemple reliée à un gicleur apte à délivrer un jet de liquide au niveau du parebrise d'un véhicule.

Le système de lave-vitre 3 comporte de plus une première ligne électrique 22 reliée à une borne d'entrée de la pompe 11. Cette ligne électrique peut être reliée via une commande 23 au niveau du volant du véhicule par exemple sous forme d'un interrupteur ou via un boitier de servitude (BSI), à un pôle positif de la batterie.

L'autre borne d'entrée de la pompe 11 est reliée aux moyens 9 de génération de signaux de contrôle électriques.

Les moyens de génération 9 comportent une surface 35 formant came disposée sur une roue liée à rotation concentriquement avec l'arbre du moteur d'entrainement 7 et des moyens de lecture fixes.

La came 35 comporte une première piste conductrice circulaire 40, une deuxième piste conductrice 42 en arc de cercle, concentrique par rapport à la première piste conductrice 40 et reliée à celle-ci via un pont conducteur 44 disposé entre les deux pistes conductrices 40 et 42.

Les moyens de lecture fixes sont constitués par trois frotteurs 46, 48, 50 aptes à entrer ou non en contact électrique avec respectivement les première 40 et deuxième 42 pistes conductrices et le pont conducteur 44 suivant les positions angulaires occupées par ladite came 35. Le pont conducteur 44 est orienté radialement par rapport à l'axe de rotation de la came 35.

Avantageusement, les première et deuxième pistes conductrices 40, 42 et le pont conducteur 44 sont réalisés d'une seule pièce, par exemple réalisés en matière conductrice de type laiton, ce qui facilité l'assemblage avec la roue qui est par exemple en plastique et ce qui réduit le temps de montage.

Selon l'exemple sur les figures, la première piste conductrice 40 est située à l'extérieur par rapport à la deuxième piste conductrice 42 et au pont conducteur 44.

La première piste conductrice 40 est reliée à la masse via son frotteur associé 46, le frotteur 48 associé à la deuxième piste conductrice 42 est reliée à la pompe 11 et le frotteur 50 associé au pont conducteur 44 est relié à une borne 52 de commande du moteur d'entraînement 50 pour signaler la position d'arrêt.

L'étendue de la deuxième piste conductrice 42 correspond à un angle β définissant la fonction d'arrosage du système lave-vitre 3, en particulier pour réaliser un arrosage lors de la montée des balais d'essuie-glace. L'arc de cercle s'étend sur un angle β définissant la surface à essuyer sur le pare-brise du véhicule. Cette surface représente la distance que parcours le balai d'essuie glace dans une phase montante ou une phase descendante. L'arc de cercle s'étend notamment sur un angle β de moins de 180°. De manière préférentielle et après une série de tests, il s'est avéré que le lavage était optimum lorsque l'arc de cercle s'étend notamment sur un angle β compris entre 80° et 130°.

Le système d'essuyage 1 fonctionne de la manière suivante :
De façon générale, le frotteur 46 est toujours en contact avec la piste conductrice 40 indépendamment de position du moteur d'entraînement 7 et relie cette piste 40 à la masse.

Ainsi, toutes les pistes sont toujours reliés à la masse ce qui augmente la sûreté de fonctionnement du système 1.

Sur la figure 1, le système 1 est en position parking (ou position d'arrêt). Dans ce cas, le frotteur 50 est en contact avec le pont conducteur 44 et le frotteur 48 avec la piste conductrice 42 en arc de cercle. Dans cette position, la ligne 22 n'est pas reliée à une borne positive et par conséquent la pompe 11 n'est pas alimentée.

Puis, si le conducteur commande par exemple au niveau du volant du véhicule un cycle de lavage (l'interrupteur 23 se ferme), dans ce cas, la ligne 22 est reliée à une borne de tension positive et du fait que le frotteur 50 est relié via la piste conductrice 42, le pont conducteur 44, la piste conductrice 40 et le frotteur 46 à la masse, la pompe 11 commence à fonctionner et un jet de liquide de lavage est projeté sur la surface vitré du véhicule.

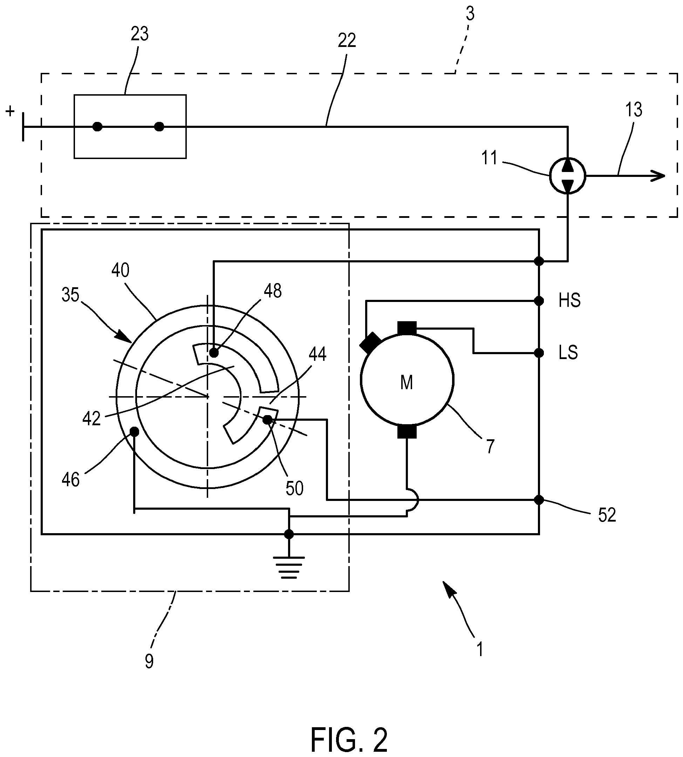

En même temps, le moteur d'entraînement 7 commence à fonctionner et quitte sa position de parking ce qui a pour effet que le frotteur 50 n'est plus en contact avec le pont conducteur 44 (voir figure 2). Sur les figures, le moteur d'entraînement 7 tourne dans le sens antihoraire.

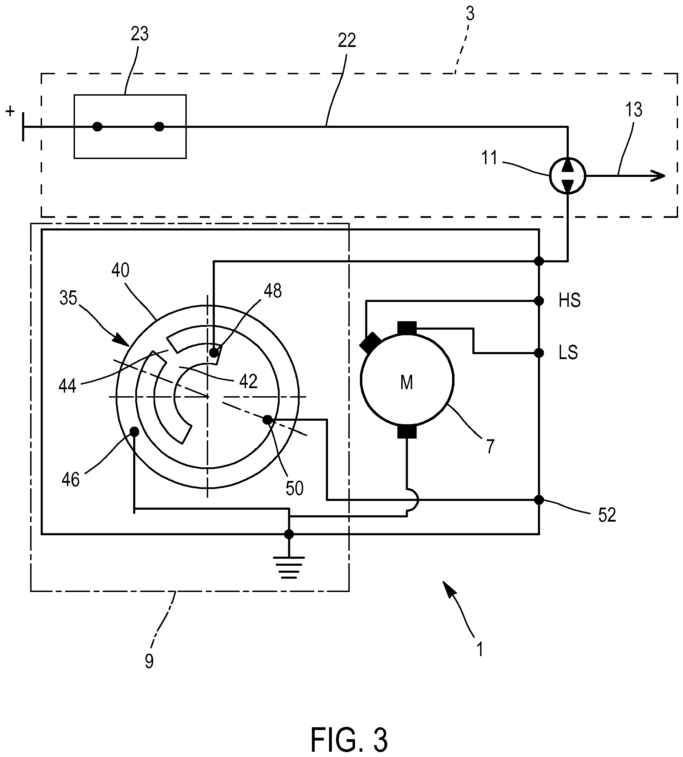

La pompe 11 fonctionne tant que le frotteur 48 est en contact avec la deuxième piste conductrice 42 en arc de cercle, ceci lors de la montée des balais d'essuie-glace (voir aussi figure 3).

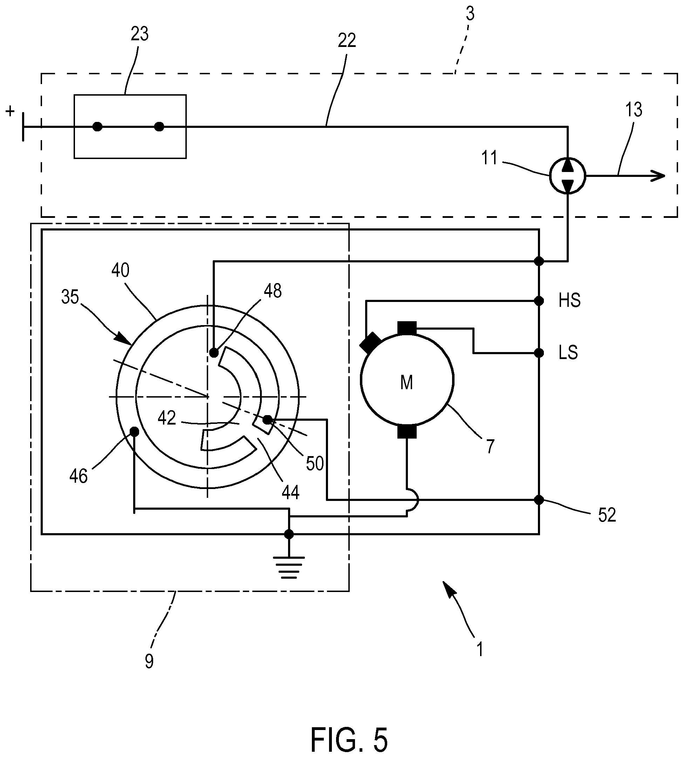

Lorsque le frotteur 48 n'est plus en contact avec la deuxième piste conductrice 44 et frotte, comme le frotteur 50 sur la partie plastique isolante de la roue, la pompe 11 s'arrête et la projection du jet de liquide de lavage est interrompue (voir figure 5). Ceci correspond au moment où les balais d'essuie-glace descendent. Ainsi, on améliore la visibilité du conducteur durant l'essuyage.

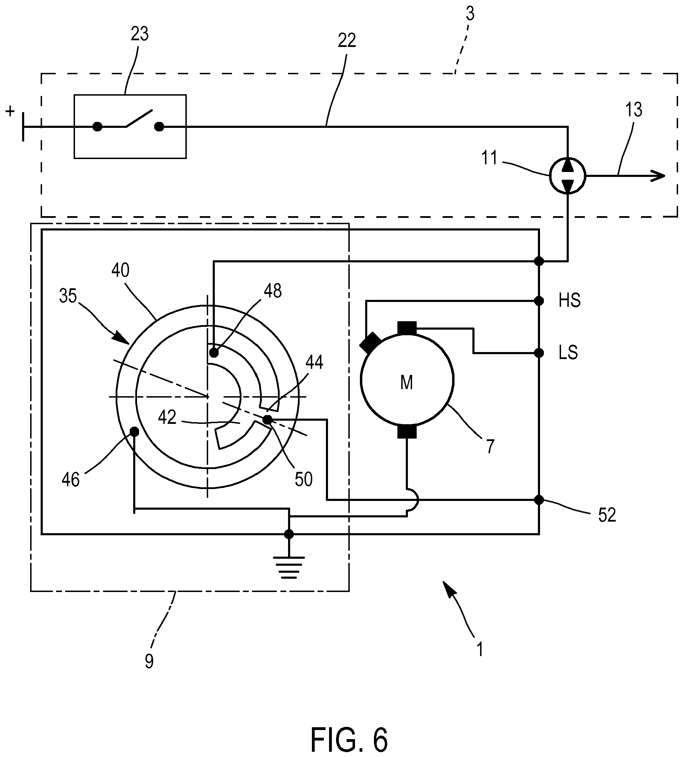

Puis en référence à la figure 6, le moteur d'entraînement 7 avec la came 35 arrive à nouveau dans la position de parking, ce qui a pour effet l'arrêt du moteur d'entraînement et l'arrêt de l'alimentation de la pompe 11.

On comprend donc que le système d'essuyage 1 permet de réaliser avec un nombre réduits de composants (uniquement trois frotteurs 46, 48 et 50 et une came portant un ensemble de pistes conductrices réalisées d'une seule pièce) et de façon peu onéreuse une fonction de lavage synchronisée avec le déplacement des balais d'essuie-glace.

## Revendications

1. Moteur d'entraînement (7) d'au moins un bras porte-balai, destiné à essuyer une surface vitrée de véhicule automobile, le moteur comprenant une surface formant came (35) liée à rotation concentriquement avec un arbre de rotation du moteur d'entrainement (7), et des moyens fixes de lecture de la came aptes à coopérer avec ladite came (35) suivant les positions angulaires occupées par ladite came (35) pour générer des signaux de contrôle électriques variant en fonction de la position angulaire du bras porte-balai sur la surface vitrée, la came (35) comportant une première piste conductrice circulaire (40), une deuxième piste conductrice en arc de cercle (42), concentrique par rapport à la première piste conductrice (40) **caractérisé en ce que** la deuxième piste conductrice (42) est reliée à la première piste conductrice (40) via un pont conducteur (44) et **en ce que** les moyens de lecture fixes sont formés par trois frotteurs (46, 48, 50) aptes à entrer ou non en contact électrique avec respectivement les première (40) et (42) deuxième pistes conductrices et le pont conducteur (44) suivant les positions angulaires occupées par ladite came (35).

2. Moteur d'entraînement selon la revendication 1, **caractérisé en ce que** les première (40) et deuxième (42) pistes conductrices et le pont conducteur (44) sont réalisés d'une seule pièce.

3. Moteur d'entraînement selon l'une quelconque des revendications précédentes, **caractérisé en ce que** la première piste conductrice (40) est reliée à la masse via son frotteur associé (46).

4. Moteur d'entraînement selon l'une quelconque des revendications précédentes, **caractérisé en ce que** le frotteur (48) associé à la deuxième piste conductrice (42) est reliée à une pompe (11).

5. Moteur d'entraînement selon l'une quelconque des revendications précédentes, **caractérisé en ce que** le frotteur (50) associé au pont conducteur (44) est relié à une borne (52) de commande du moteur d'entraînement (7) pour signaler la position d'arrêt.

6. Moteur d'entraînement selon l'une quelconque des revendications précédentes, **caractérisé en ce que** la deuxième piste conductrice (42) et le pont conducteur (44) sont situés à l'intérieur de la première piste conductrice (40).

7. Moteur d'entraînement selon l'une quelconque des revendications précédentes, **caractérisé en ce que** l'étendue de la deuxième piste conductrice (42) correspond à un angle définissant la fonction d'arrosage d'un système lave-vitre (3).

8. Moteur d'entraînement selon la revendication 7, **caractérisé en ce que** la fonction d'arrosage est définie pour réaliser un arrosage lors de la montée des balais d'essuie-glace.

9. Moteur d'entraînement selon l'une quelconque des revendications précédentes, **caractérisé en ce que** les première (40) et deuxième pistes (42) conductrices ainsi que le pont conducteurs (44) sont réalisés en matière conductrice de type laiton.

10. Moteur d'entraînement selon l'une quelconque des revendications précédentes, **caractérisé en ce que** le pont conducteur (44) est orienté radialement par rapport à l'axe de rotation de la came (35).

11. Système d'essuyage (1) d'une surface vitrée de véhicule automobile présentant un système de lave-vitre (3) apte à être utilisé en association avec un réservoir contenant un liquide de lavage, ledit système d'essuyage comprenant
- un moteur d'entraînement (7) selon l'une des revendications précédentes,
et le système de lave-vitre (3) comprenant
- une pompe (11) destinée à être reliée fluidiquement d'une part audit réservoir, et d'autre part à au moins un gicleur apte à délivrer un jet de liquide au niveau de la surface vitrée du véhicule.

## Patentansprüche

1. Antriebsmotor (7) für mindestens einen Blatthalterarm zum Reinigen einer Scheibenoberfläche eines Kraftfahrzeugs, wobei der Motor eine Nockenfläche (35), die konzentrisch drehbar mit einer Drewelle des Antriebsmotors (7) verbunden ist, und feste Mittel zur Wiedergabe der Nocke umfasst, die angepasst sind, um mit der Nocke (35) gemäß den von der Nocke (35) eingenommenen Winkellagen zusammenzuwirken, um elektrische Steuersignale zu erzeugen, die in Abhängigkeit von der Winkellage des Blatthalterarms auf der Scheibenoberfläche variieren, wobei die Nocke (35) eine erste kreisförmige Leiterbahn (40), eine zweite kreisbogenförmige Leiterbahn (42) umfasst, die zur ersten Leiterbahn (40) konzentrisch angeordnet ist, **dadurch gekennzeichnet, dass** die zweite Leiterbahn (42) über eine leitende Brücke (44) mit der ersten Leiterbahn (40) verbunden ist und dass die festen Wiedergabemittel durch drei Schleiffedern (46, 48, 50) gebildet sind, die in der Lage sind, einen elektrischen Kontakt mit der ersten (40) und zweiten (42) Leiterbahn und der leitenden Brücke (44) gemäß den von der Nocke (35) eingenommenen Winkellagen herzustellen oder nicht.

2. Antriebsmotor nach Anspruch 1, **dadurch gekennzeichnet, dass** die erste (40) und zweite (42) Leiterbahn und die leitende Brücke (44) aus einem Stück gefertigt sind.

3. Antriebsmotor nach einem der vorhergehenden Ansprüche, **dadurch gekennzeichnet, dass** die erste Leiterbahn (40) über ihre zugehörige Schleiffeder (46) mit der Erde verbunden ist.

4. Antriebsmotor nach einem der vorhergehenden Ansprüche, **dadurch gekennzeichnet, dass** die der zweiten Leiterbahn (42) zugeordnete Schleiffeder (48) mit einer Pumpe (11) verbunden ist.

5. Antriebsmotor nach einem der vorhergehenden Ansprüche, **dadurch gekennzeichnet, dass** die der leitenden Brücke (44) zugeordnete Schleiffeder (50) mit einer Steuerklemme (52) des Antriebsmotors (7) verbunden ist, um die Halteposition zu signalisieren.

6. Antriebsmotor nach einem der vorhergehenden Ansprüche, **dadurch gekennzeichnet, dass** die zweite Leiterbahn (42) und die leitende Brücke (44) innerhalb der ersten Leiterbahn (40) angeordnet sind.

7. Antriebsmotor nach einem der vorhergehenden Ansprüche, **dadurch gekennzeichnet, dass** der Umfang der zweiten Leiterbahn (42) einem Winkel entspricht, der die Bewässerungsfunktion eines Scheibenwaschsystems (3) definiert.

8. Antriebsmotor nach Anspruch 7, **dadurch gekennzeichnet, dass** die Bewässerungsfunktion definiert ist, um beim Anheben der Wischerblätter eine Bewässerung auszuführen.

9. Antriebsmotor nach einem der vorhergehenden Ansprüche, **dadurch gekennzeichnet, dass** die erste (40) und zweite (42) Leiterbahn und die leitende Brücke (44) aus einem leitfähigen Material vom Typ Messing hergestellt sind.

10. Antriebsmotor nach einem der vorhergehenden Ansprüche, **dadurch gekennzeichnet, dass** die leitende Brücke (44) radial zur Drehachse der Nocke (35) ausgerichtet ist.

11. Reinigungssystem (1) für eine Scheibenoberfläche eines Kraftfahrzeugs mit einem Scheibenwaschsystem (3), das zur Verwendung in Verbindung mit einem eine Waschflüssigkeit enthaltenden Tank geeignet ist, wobei das Reinigungssystem umfasst:
- einen Antriebsmotor (7) nach einem der vorhergehenden Ansprüche,
und das Scheibenwaschsystem (3), umfassend
- eine Pumpe (11), die dazu bestimmt ist, einerseits mit dem Tank und andererseits mit mindestens einer Düse fluidisch verbunden zu sein, die in der Lage ist, einen Flüssigkeitsstrahl auf die Scheibenoberfläche des Fahrzeugs abzugeben.

## Claims

1. Drive motor (7) for at least one wiper arm intended to wipe a glazed surface of a motor vehicle, the motor comprising a cam surface (35) linked in concentric rotation with a rotary shaft of the drive motor (7), and static cam reading means able to cooperate with said cam (35) according to the angular positions occupied by said cam (35) to generate electrical control signals varying as a function of the angular position of the wiper arm on the glazed surface, the cam (35) having a first circular conductive track (40), a second circular arc conductive track (42) concentric to the first conductive track (40), **characterized in that** the second conductive track (42) is connected to the first circular conductive track (40) via a conductive bridge (44), and **in that** the static reading means are formed by three sliding contacts (46, 48, 50) able to make and break electrical contact with respectively the first (40) and second (42) conductive tracks and the conductive bridge (44) depending on the angular positions occupied by said cam (35).

2. Drive motor according to Claim 1, **characterized in that** the first (40) and second (42) conductive tracks and the conductive bridge (44) are made from a single part.

3. Drive motor according to any one of the preceding claims, **characterized in that** the first conductive track (40) is linked to ground via the related sliding contact (46).

4. Drive motor according to any one of the preceding claims, **characterized in that** the sliding contact (48) related to the second conductive track (42) is linked to a pump (11).

5. Drive motor according to any one of the preceding claims, **characterized in that** the sliding contact (50) related to the conductive bridge (44) is linked to a control terminal (52) of the drive motor (7) to indicate the stopped position.

6. Drive motor according to any one of the preceding claims, **characterized in that** the second conductive track (42) and the conductive bridge (44) are located inside the first conductive track (40).

7. Drive motor according to any one of the preceding claims, **characterized in that** the length of the second conductive track (42) corresponds to an angle defining the spray function of a screen wash system (3).

8. Drive motor according to Claim 7, **characterized in that** the spray function is defined to spray when the wiper blades are moving upwards.

9. Drive motor according to any one of the preceding claims, **characterized in that** the first (40) and second (42) conductive tracks and the conductive bridge (44) are made of a conductive material such as brass.

10. Drive motor according to any one of the preceding claims, **characterized in that** the conductive bridge (44) is oriented radially in relation to the axis of rotation of the cam (35).

11. Wiper system (1) for a glazed surface of a motor vehicle having a screen wash system (3) that can be used in combination with a tank containing screen wash, said wiper system including
- a drive motor (7) according to one of the preceding claims,
and the screen wash system (3) including
- a pump (11) intended to be linked fluidly firstly to said tank and secondly to at least one nozzle able to deliver a jet of liquid onto the glazed surface of the vehicle.
